Europäisches Patentamt

(19) European Patent Office

Office européen des brevets

(11) Publication number: **0 279 676**
**A2**

(12) **EUROPEAN PATENT APPLICATION**

(21) Application number: 88301380.7

(51) Int. Cl.⁴: **A 01 N 63/04**

(22) Date of filing: 18.02.88

(30) Priority: 18.02.87 GB 8703685

(43) Date of publication of application:
24.08.88 Bulletin 88/34

(84) Designated Contracting States:
BE DE FR GB NL SE

(71) Applicant: SHELL INTERNATIONALE RESEARCH
MAATSCHAPPIJ B.V.
Carel van Bylandtlaan 30
NL-2596 HR Den Haag (NL)

(72) Inventor: Fox-Roberts, Judith Jane
35 Carolhill Park
Belfast, BT4 2FS Northern Ireland (GB)

Deacon, James William
16 Corunna Terrace Penicuik
Midlothian, EH 26 0LQ Scotland (GB)

(74) Representative: Hunter, Keith Roger Ian et al
4 York Road
London SE1 7NA (GB)

(54) Biological control of take-all fungi.

(57) A method of combating Take-all fungi in a cereal or grass
crop is provided which comprises treating the crop, seeds of
such a crop, or the medium in which the crop is growing or is to
be grown with the fungus Microdochium bolleyi.

EP 0 279 676 A2

Bundesdruckerei Berlin

## Description

### BIOLOGICAL CONTROL OF TAKE-ALL FUNGI

This invention relates to a method of combating Take-all fungi in a cereal or grass crop using the fungus Microdochium bolleyi as a biological control agent.

Take-all fungi are deemed to be varieties of Gaeumannomyces graminis (Sacc.) Arx & Olivier, such as G.graminis vars. tritici, avenae and graminis, and fungi with a similar infection habit on cereal and grass roots, such as Phialophora zeicola, Phialophora graminicola and Rhizoctonia solani, the relevant infection habit being ectotrophic growth by dark hyphae. They infect roots and stem bases of cereal and grass crops causing serious disease of these crops in many parts of the world. For most of these diseases there is no satisfactory chemical control method or source of plant resistance. Various biological control agents have been proposed for use against these diseases but all those proposed have had certain deficiencies which may limit their practical use. For instance, it has been shown, inter alia, in "Biology and Control of Take-all", Eds. M.J.C. Asher and P.J. Shipton, Academic Press, London, 1981, that weakly or non-pathogenic fungi such as Phialophora graminicola (Deacon) Walker and Gaeumannomyces graminis (Sacc.) Arx and Olivier var graminis can control the Take-all fungus, G.graminis var tritici Walker on cereal roots. Unfortunately, some of these control agents do not readily produce germinable spores in culture and it would therefore be difficult to prepare inocula of these fungi for commercial use. Also, these fungi do not normally occur at high population levels in cereal crops so they are unlikely to give long-term disease control in cereal monocultures.

In a search for alternative biocontrol agents of Take-all that do not have the above disadvantages, the fungus Microdochium bolleyi (Sprague) de Hoog and Hermanides-Nijhof 1977 (previously known as Aureobasidium bolleyi (Sprague) von Arx 1957) was identified as a potential candidate. Microdochium bolleyi is commonly found on cereal and grass roots but causes little, if any, damage in field conditions. Consequently, it is classed as a "minor pathogen". However, it is reported to control several major pathogens on cereal roots and stem bases (see, inter alia, "Soil-borne Plant Pathogens", Eds. B. Schippers and W. Gams, Academic Press, London, 1979). "New Phytol" (1986) 104, 63-75 even mentions in passing that Microdochium bolleyi is a biocontrol agent of Take-all fungi. However, it contains no experimental evidence to substantiate this statement and provides no information as to how Microdochium bolleyi may be applied to control Take-all fungi in cereal or grass crops in the field.

According to the present invention there is therefore provided a method of combating Take-all fungi in a cereal or grass crop which comprises treating the crop, seeds of such a crop, or the medium in which the crop is growing or is to be grown with the fungus Microdochium bolleyi.

Samples of Microdochium bolleyi may be obtained under catalogue reference number 618.72 from Centraalbureau voor Schimmelcultures, Oosterstraat 1, Postbus 273, 3740 AG Baarn, Netherlands.

The fungus Microdochium bolleyi is capable of growing on plant roots, seeds or stem bases and may be cultured in liquid or on solid media to provide inocula for use in biological control. These inocula may be applied on or around cereal or grass plants to control the growth of Take-all fungi. Introduced inocula of the control agent may be in the form of spores, mycelia, yeast-like cells or resting cells (chlamydospores). The inocula may be applied to seeds, stem bases, soil, crop residues or to the water used for irrigation purposes. They may be applied to commercial cereal crops and commercial, amenity, sports or natural grasslands by any of the conventional spraying or other techniques to effect disease control. Moreover, naturally occurring or induced variants or genetically modified forms of Microdochium bolleyi can be cultured and applied in an entirely analogous way to the "wild-type" forms described above. Microdochium bolleyi may also be used in combination with other biological or chemical agents.

In one, most preferred, embodiment of the invention, an inoculum of Microdochium bolleyi is applied to seeds of the crop. Preferably, the inoculum comprises spores of Microdochium bolleyi. It is also preferred that the inoculum is applied to the seeds either by immersing the seeds in a suspension of spores of Microdochium bolleyi or incorporating the inoculum into a polymeric coating on the seeds. Any suitable polymeric seed coating may be used.

In particular, Microdochium bolleyi may be cultured in a liquid medium, the spores harvested and then applied either in wet or dry form to seeds.

An especially preferred method comprises growing Microdochium bolleyi in shaken or stirred liquid culture containing a cheap commercial substrate, such as molasses, corn steep, etc, at 20-25°C, collecting the spores and other fungal cells and applying these to seed (using a suitable coating methodology where appropriate) so that the fungus will colonise the seed coat and grow onto the emerging roots and/or stem base tissues when the seed germinates. This method may be used in each year or only some years of a cereal cropping sequence. However, it is preferable to use the method at least for the first and second crops in a cereal cropping sequence, that is, before the soil population of Take-all fungi has built up to a high level, so as to reduce Take-all infection on the treated crop and also to reduce the amount of Take-all fungi surviving to infect a subsequent crop.

In a second embodiment of the invention, an inoculum of Microdochium bolleyi is applied to the medium in which the crop is growing or is to be grown. In this case, the inoculum preferably comprises a culture of Microdochium bolleyi on a solid medium, such as maizemeal-sand mixture, which may then be incorporated into soil in which the crop is growing or mixed with soil in which the crop is to be grown.

In particular, Microdochium bolleyi may be cultured on a solid medium and then incorporated into the soil in drill rows to control Take-all in a growing crop, or after harvest so that the Microdochium bolleyi occupies the crop residues at the end of the growing season and effects disease control in a following crop.

The method of the invention is of particular use when the crop to be protected is wheat or barley.

The ability of Microdochium bolleyi to control infection of wheat roots by the wheat take-all fungus, Gaeumannomyces graminis var. tritici is demonstrated in the following examples which illustrate the method of the invention.

Examples

Preparation of materials

Gaeumannomyces graminis var. tritici, Periconia macrospinosa and Microdochium bolleyi were isolated from wheat crops, and Phialophora graminicola from grass turf, near Edinburgh. The isolate of Gaeumannomyces graminis var. tritici was highly virulent, whereas the other fungi caused no disease symptoms on wheat roots in glasshouse inoculations. for most experiments the inocula consisted of maizemeal-sand (3% w/w) at 60% saturation, colonised by the fungi during 28 days at 25°C.

The soil used was a clay-loam from beneath a sequence of potato crops near Edinburgh. It did not contain detectable populations of any of the fungi under study when sown with wheat for assay purposes in the glasshouse. Before use, the soil was air-dried, sieved 2.4 mm and mixed with sand (1:2, w/w). Its saturation capacity was 30g water per 100g air-dry mixture.

Example 1

For use as dispersed inoculum, a maizemeal-sand culture of Gaeumannomyces graminis var tritici was added at 0.1% (w/w) to air-dry soil and mixed thoroughly by shaking in a plastic bag. Batches of this soil were then mixed with maizemeal-sand inoculum of either Microdochium bolleyi or Periconia macrospinosa to give the inoculum ratios (by weight) shown in Table 1. A further treatment comprised the control agent alone at either 0.1% or 1.0% inoculum level. Each inoculated soil was added to four replicate plastic drinking cups (300g soil per cup), sown with 10 wheat grains (cv. Maris Huntsman) and brought to 60% saturation with tap water. The cups were incubated in a glasshouse for 28 days at 21°C. The wheat tops were then removed and the cups resown with 20 wheat grains. The cups were incubated for a further 16 days and then the roots of the second-sown wheat seedlings were sampled.

The three oldest seminal roots of each seedling were examined against a white background under a dissecting microscope at ×50 magnification. Each root was scored for presence or absence of Take-all lesions (intense vascular discolouration). The results for roots in each cup were then pooled and the results presented as means with standard errors for four replicate cups in each experiment. The final results are given in Table 1.

From Table 1, it is apparent that the number of roots infected by Gaeumannomyces graminis var tritici decreased progressively in the presence of increasing inoculum levels of Microdochium bolleyi . Very highly significant disease control was found when the inoculum ratio Microdochium bolleyi : Gaeumannomyces graminis var tritici was 10:1 or more. In identical conditions, Periconia macrospinosa failed to control Gaeumannomyces graminis var tritici even at an inoculum ratio of 100:1 (results not tabulated). For example, at this inoculum ratio 50 ± 4.2 roots bore Take-all lesions compared with 60 ± 0 roots in the presence of Gaeumannomyces graminis var tritici alone. This illustrates the specificity of the effect of Microdochium bolleyi as a biological control agent.

Example 2

This involved the use of layered inocula. Soil containing dispersed inoculum of Gaeumannomyces graminis var tritici (0.1%) was added to cups as a 2 cm deep bottom layer and the cups were then filled with pathogen-free soil. Five 11mm diameter discs of potato-dextrose agar colonised by Microdochium bolleyi were placed on the soil surface and a wheat grain was placed on each of these discs so that the emerging roots would grow through the discs. The grains were then lightly covered with soil, the soil was brought to 60% saturation and the cups were incubated for 28 days at 21°C before the seedlings were harvested.

As in Example 1, the three oldest seminal roots of each seedling were examined against a white background under a dissecting microscope at ×50 magnification and each root was scored for presence or absence of Take-all lesions. The distance between the grain and the nearest point of vascular discolouration was also recorded and the results are given in Table 2.

As can be seen from Table 2, the presence of Microdochium bolleyi on root regions below the grain restricted the upward spread of Take-all lesions thereby significantly increasing the length of disease-free root between the grains and the layer of inoculum of Gaeumannomyces graminis var tritici.

Example 3

The method used was similar to that of Example 1 except that an inoculum of Phialophora graminicola (0.1%) was used instead of Gaeumannomyces graminis var tritici and that the second-sown wheat grains were grown for 20 days before harvesting.

Again, the three oldest seminal roots of each seedling were examined against a white background under a dissecting microscope at ×50 magnification. Infection by Phialophora graminicola was scored as presence or absence of runner hyphae of this fungus, a distinction being made between roots that bore any runner hyphae and those with three or more runner hyphae in any one microscope field of view. The results are given in Table 3.

From Table 3, it is apparent that, at inoculum ratios of 5:1 and 10:1 Microdochium bolleyi: Phialophora graminicola, Microdochium bolleyi significantly reduced growth by Phialophora graminicola.

Example 4

Wheat seeds were immersed in methanol, washed in water and then immersed in suspensions of spores from 5 day old cultures of Microdochium bolleyi grown on a 1% solution of molasses at 25°C. Six seeds, either wet or dried overnight in an air stream, were sown in sterilised perlite in each one of four replicate pots so that the wheat roots would grow down into a layer of maizemeal-sand culture of Gaeumannomyces graminis var tritici placed 3 cm below the wheat seeds. Controls were set up using untreated wheat seeds. The perlite was saturated with water and the pots then incubated for 28 days at 21°C before the seedlings were harvested.

As in Example 2, the three oldest seminal roots of each seedling were examined against a white background under a dissecting microscope at ×50 magnification, each root was scored for presence or absence of Take-all lesions and the distance between the grain and the nearest point of vascular dicolouration was recorded. The results are given in Table 4.

As shown in Table 4, seed treatment with Microdochium bolleyi consistently reduced the ability of the Take-all fungus to spread up the roots towards the seeds thereby demonstrating both the effectiveness of seed-applied inocula of Microdochium bolleyi and the fact that Microdochium bolleyi can control Take-all disease in the absence of other microorganisms.

## Table 1

Numbers of wheat seminal roots (max. 60) with take-all lesions when growing in soil containing different amounts of maizemeal-sand inoculum of <u>Gaeumannomyces</u> <u>graminis</u> var <u>tritici</u> and <u>Microdochium</u> <u>bolleyi</u>

| Inoculum added to soil (%) | | No. roots with take-all lesions (mean $\pm$ SE for 4 replicate containers) |
|---|---|---|
| <u>G.graminis</u> | <u>M.bolleyi</u> | |
| 0 | 0.1 | 0 |
| 0.1 | 0 | 52.3 $\pm$ 2.35  a,b,c |
| 0.1 | 0.5 | 43.6 $\pm$ 3.43 |
| 0.1 | 1.0 | 37.1 $\pm$ 2.33  a |
| 0.1 | 5.0 | 16.9 $\pm$ 2.68  b |
| 0.1 | 10.0 | 13.6 $\pm$ 4.83  c |

a,b,c  Results followed by the same letter differ significantly from one another at $\underline{P} < 0.001$

## Table 2

Spread of take-all lesions up roots from a bottom inoculum layer in the presence or absence of <u>Microdochium bolleyi</u> established on roots immediately below the grain

| Treatment | Distance (mm) between grain and nearest vascular discolouration * | |
|---|---|---|
| | Any discoloration | Intense discoloration |
| <u>G.graminis</u> alone | 12.3 ± 5.58 a | 22.3 ± 4.29 b |
| <u>G.graminis</u> + <u>M.bolleyi</u> | 34.3 ± 4.71 a | 50.2 ± 2.44 b |

\* Means ± SE for 4 replicate containers each containing 15 roots

a,b Results followed by the same letter differ significantly at $\underline{P} < 0.001$

## Table 3

Numbers of wheat seminal roots (max. 60) bearing runner hyphae of Phialophora graminicola in the presence or absence of differenct amounts of inoculum of Microdochium bolleyi

| Inoculum added to soil (%) | | No. roots with runner hyphae (means ± SE for 4 replicate containers) | |
|---|---|---|---|
| P.graminicola | M.bolleyi | Any runner hyphae | Three or more runner hyphae |
| 0 | 0.1 | 0 | 0 |
| 0.1 | 0 | 59.0 ± 1.00 a,b | 52.1 ± 4.23 c,d |
| 0.1 | 0.1 | 59.8 ± 0.35 | 51.3 ± 5.15 |
| 0.1 | 0.2 | 58.0 ± 1.40 | 52.7 ± 3.83 |
| 0.1 | 0.5 | 48.0 ± 3.10 a | 29.1 ± 2.33 c |
| 0.1 | 1.0 | 32.8 ± 6.65 b | 19.5 ± 4.10 d |

Results followed by the same letter differ from one another at $P < 0.05$ (a) or $P < 0.01$ (b,c,d)

## Table 4

Spread of take-all lesions up roots of wheat seedlings from a bottom layer of inoculum of G.graminis, when the wheat seeds had, or had not, been treated with a spore suspension of Microdochium bolleyi (2 isolates)

| Treatment | Distance (mm) between seed and nearest vascular disease of roots* | |
|---|---|---|
| | Mild discolouration | Severe discolouration |
| None (G.graminis only) | 0.8 ± 0.18 | 1.4 ± 0.16 |
| M.bolleyi (isolate 1) | 1.8 ± 0.25 | 2.4 ± 0.37 |
| M.bolleyi (isolate 2) | 2.3 ± 0.46 | 3.7 ± 0.81 |

* Means ± standard error for 4 replicate plant pots each containing 6 plants

0 279 676

**Claims**

1. A method of combating Take-all fungi in a cereal or grass crop which comprises treating the crop, seeds of such a crop, or the medium in which the crop is growing or is to be grown with the fungus Microdochium bolleyi.

2. A method according to claim 1 which comprises applying an inoculum of Microdochium bolleyi to seeds of the crop.

3. A method according to claim 2 in which the inoculum comprises spores of Microdochium bolleyi.

4. A method according to claim 2 or claim 3 in which the seeds are immersed in a suspension of spores of Microdochium bolleyi.

5. A method according to claim 2 or claim 3 in which the inoculum is incorporated into a polymeric coating on the seeds.

6. A method according to claim 1 which comprises applying an inoculum of Microdochium bolleyi to the medium in which the crop is growing or is to be grown.

7. A method according to claim 6 in which the inoculum comprises a culture of Microdochium bolleyi on a solid medium.

8. A method according to claim 6 or claim 7 in which the inoculum is incorporated into soil in which the crop is growing.

9. A method according to claim 6 or claim 7 in which the inoculum is mixed with soil in which the crop is to be grown.

10. A method according to any preceding claim in which the crop is wheat or barley.